# EUROPÄISCHE PATENTSCHRIFT

(11) **EP 0 386 493 B1**
(45) Veröffentlichungstag und Bekanntmachung des Hinweises auf die Patenterteilung: **10.02.1993**
(21) Anmeldenummer: 90102769.8
(22) Anmeldetag: 13.02.1990
(51) Int. Cl.: D06F 39/08, F16L 11/16, F16L 27/10, G01F 23/16

(54) **Druckleitung mit Druckkammer**
Pressure line with a pressure chamber
Conduite de pression avec chambre de pression

(30) Priorität: 09.03.1989 DE 8902870 U
(43) Veröffentlichungstag der Anmeldung: 12.09.1990
(73) Patentinhaber: TRUPLAST KUNSTSTOFFTECHNIK GMBH, D-35428 Langgöns (DE)
(72) Erfinder: Linhart, Georg, D-6362 Wöllstadt (DE)
(74) Vertreter: Oppermann, Ewald, Dipl.-Ing.

(56) Entgegenhaltungen:
- EP-A- 0 062 721
- DE-A- 2 118 174
- DE-A- 2 306 530
- GB-A- 2 040 013

## Beschreibung

Die Erfindung bezieht sich auf eine Druckleitung mit Druckkammer nach dem Oberbegriff des Anspruches 1.

Druckleitungen mit Druckkammer der im Oberbegriff des Anspruches 1 genannten Art werden schon seit geraumer Zeit in Verbindung mit einem Druckschalter überall dort verwendet, wo eine bestimmte Füllhöhe einer Flüssigkeit in einem Behälter einzuhalten ist. Das ist beispielsweise bei Waschmaschinen und Spülmaschinen der Fall (siehe z.B. die DE-A-2 118 174).

Bei einer bekannten Ausführung einer Druckleitung mit Druckkammer besteht die Druckkammer aus einem in seiner Bestimmungslage lotrecht angeordneten Rohr, das an seinem unteren Ende einen Anschluß für einen zugeordneten Behälter aufweist. Am entgegengesetzten Ende ist das Rohr druckdicht mit einem Schlauch vereinigt, dessen freies Ende zur Verbindung mit einem Stutzen eines Druckschalters ausgebildet ist. Das lichte Volumen des Rohres ist so gewählt, daß bei einer bestimmten Flüssigkeitshöhe im zugeordneten Behälter eine im Rohr eingeschlossene Luftsäule auf einen Wert komprimiert wird, der ausreicht, eine im Druckschalter befindliche Membrane aus einer Ruhelage auszulenken. Die Membrane wirkt auf elektrische Schalter, mit denen Einrichtungen zum Einhalten eines gewünschten Flüssigkeitsniveaus im zugeordneten Behälter erregt oder entregt werden können, zum Beispiel Pumpen,Ventile oder dergleichen.

Die bekannte Druckleitung ist im Bereich des die Druckkammer bildenden Rohres steif und über die Länge des angeschlossenen Schlauches flexibel. In einer Schwingungen unterworfenen Maschine ist die Vereinigung eines starren Gliedes mit einem flexiblen Teil wegen des nicht vorhersehbaren Schwingungsverhaltens ungünstig.

Aufgabe der Erfindung ist es , die Druckleitung der im Oberbegriff des Anspruches 1 genannten Art so auszubilden, daß sie, abgesehen von den Anschlußelementen an ihren Enden, aus einem einzigen Teil besteht und ein gutes Schwingungsverhalten aufweist.

Die gestellte Aufgabe wird erfindungsgemäß durch die im kennzeichnenden Teil des Anspruches 1 angegebene Ausbildung gelöst.

Zweckmäßige Aus-und Weiterbildungen des Erfindungsgegenstandes sind in den Ansprüchen 2 bis 5 angegeben.

Aus der DE-OS 2 021 412 sind zwar schon Schläuche bekannt, die weitgehend gleich der Leitung nach Anspruch 5 sind. Die bekannten Schläuche sind jedoch als Saugschläuche für Staubsauger vorgesehen und daher kein Vorbild für die bevorzugte Ausführungsform des Erfindungsgegenstandes. Durch ihre Flexibilität über die ganze freie Länge kann sich die erfindungsgemäße Druckleitung auf auftretende Schwingungen besser einstellen als eine teilweise starre und teilweise flexible Druckleitung. Da ferner die erfindungsgemäße Druckleitung aus einem Stück besteht, entfällt bei ihr der Aufwand der Herstellung der Verbindung zwischen der Druckkammer und der übrigen Leitungslänge, wie das bei einer teils starren, teils flexiblen Druckleitung der Fall ist. Die Fertigung der erfindungsgemäßen Leitung ist daher insgesamt einfacher.

Ein Ausführungsbeispiel der Erfindung ist in der Zeichnung rein schematisch dargestellt. Es zeigen:

Fig. 1 einen Aufriß.

Fig. 2 eine vergrößerte Darstellung einer Leitungswand im Schnitt.

In der Zeichnung ist mit 1 eine Druckleitung mit Druckkammer bezeichnet. Die Druckleitung 1 dient zur Verbindung eines Flüssigkeitsbehälters 2 mit einer die Füllhöhe des Behälters 2 bestimmenden Druckschalter 3. Der Behälter 2 und der Druckschalter 3 sind, da nicht Gegenstand der Erfindung, strichpunktiert gezeichnet.

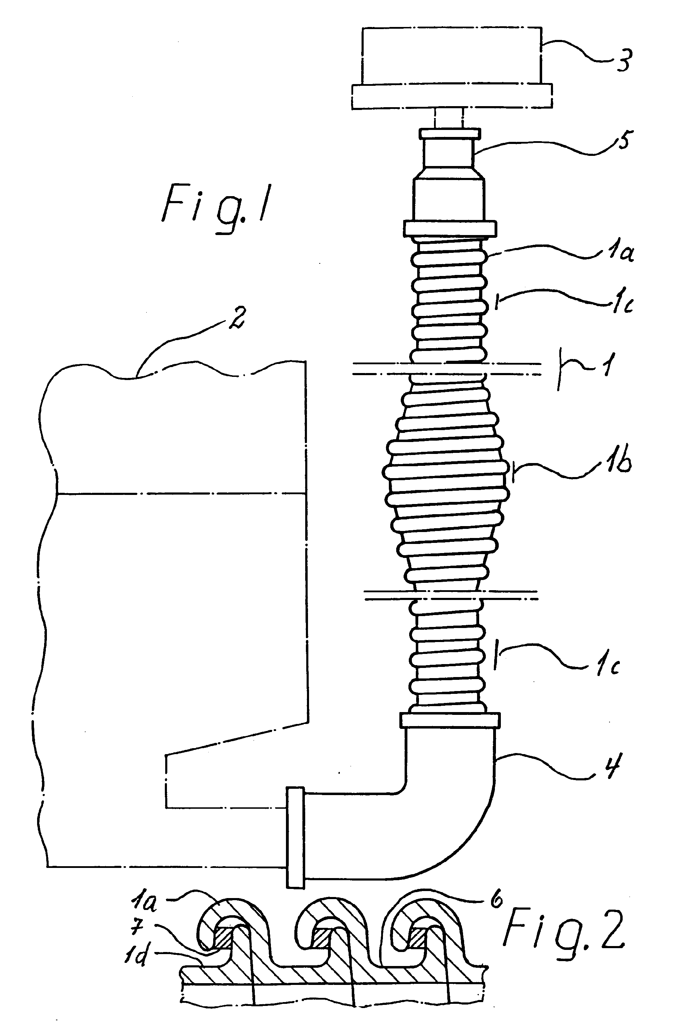

Als Druckleitung 1 ist ein innen glatter Schlauch aus thermoplastischem Material verwendet (Fig. 2). Außen weist die Druckleitung 1 einen sich über die Leitungslänge schraubenförmig verlaufenden Wulst 1a auf, der dem die Leitung 1 bildenden Schlauch eine ausreichende Stabilität gegen Innendrücke verleiht. Bei Waschmaschinen zum Beispiel liegen die auf den Schlauch wirkendenden Innendrücke in der Größenordnung von etwa 400 mm Wassersäule. Der Wulst 1a verhindert zudem, daß der Schlauch einknickt, wenn er beim Einbau in seine Bestimmungslage gebogen werden und womöglich in der gebogenen Form auch weiterhin verharren muß.

Wie aus Fig 1 ersichtlich, weist der die Druckleitung 1 bildende Schlauch in einem Teilbereich eine Erweiterung auf. Diese bildet die mit 1b bezeichnete Druckkammer, in der sich, je nach der Höhe eines Flüssigkeitsspiegels im Behälter 2, ein mehr oder minder großer Luftdruck aufbaut. Wenn dieser Druck eine vorgegebene Größe erreicht, spricht der Druckschalter 3 an und entregt zum Beispiel einen Pumpenmotor, mit dem die Flüssigkeit in den Behälter 2 gepumpt wird (nicht dargestellt).

Die Druckkammer 1b ist im dargestellten Beispiel zwischen zwei Schlauchabschnitten 1c gleichen Durchmessers angeordnet. Der Durchmesser der Druckkammer 1b erweitert sich im dargestellten Beispiel vom dem dem Behälter 2 zugewandten Schlauchabschnitt 1c stetig bis zu einem Durchmessermaximum und verengt sich anschließend wieder stetig bis zu dem Schlauchabschnitt 1c, der dem Druckschalter 3 zugeordnet ist.

An jedes freie Ende der Schlauchabschnitte gleichen Durchmessers 1c ist jeweils eine Anschlußmuffe 4 beziehungsweise 5 angespritzt. Die Anschlußmuffe 4 ist zur Verbindung mit einem waagrechten liegenden Auslass-Stutzen des Behälters 2 als Winkelmuffe ausgebildet. Die Muffe 5 ist gerade ausgebildet und so geformt, daß sie einerseits den größeren Durchmesser des zugeordneten Schlauchabschnittes 1c umfasst und andererseits auf einen gegenüber dem Schlauchabschnitt 1c im Durchmesser viel kleineren Anschlußstutzen des Druckschalters 3 aufsteckbar ist

Die Druckleitung 1 kann zum Beispiel aus einem zunächst zylindrischen Schlauch gebildet werden , der durch Druck an die Wand einer Hohlform angepreßt wird, deren Kontur der fertigen Außenkontur der Druckleitung 1 entspricht.

Der Schlauchbildner besteht, wie in Fig 2 gezeigt, in bevorzugter Weise jedoch aus einem wendelgängig gewickelten Profilband 6. Eine Längsseite des Profilbandes 6 ist zu einem zum Schlauchinnern offenen U geformt, dessen Außenseite den schraubenförmig verlaufenden Wulst 1a bildet. In die Innenseite des U-förmigen Profilbandrandes greift ein radial vom Schlauchinnern weggerichteter Steg 1d ein, der an der anderen Längsseite des Profilbandes 6 angeformt und mit mindestens einem Schenkel des U-förmigen Profilbandrandes verbunden ist . Im dargestellten Beispiel ist zur Verbindung des Steges 1d mit dem U-förmigen Profilbandrand ein Heißkleber verwendet, der mit 7 bezeichent ist.

## Patentansprüche

1. Druckleitung mit Druckkammer, zur Verbindung eines Flüssigkeitsbehälters mit einem die Füllhöhe des Behälters bestimmenden Druckschalter, **gekennzeichnet durch die Merkmale:**
a) als Druckleitung (1) wird ein innen glatter Schlauch aus thermoplastischem Material verwendet, der außen mindestens einen schraubenförmig verlaufenden, sich wenigstens bis nahezu an die Leitungsenden erstreckenden Wulst (1a) aufweist;
b) der Durchmesser des Schlauches ist zur Bildung der Druckkammer (1b) in einem Teilbereich erweitert.

2. Druckleitung nach Anspruch 1, **dadurch gekennzeichnet ,** daß die Druckkammer (1b) sich zwischen zwei Schlauchabschnitten (1c) gleichen Innendurchmessers befindet.

3. Druckleitung nach Anspruch 1 und 2, **dadurch gekennzeichnet,** daß der Durchmesser der Druckkammer (1b) sich von einem der beiden Schlauchabschnitte (1c) gleichen Durchmessers bis zu einem Durchmessermaximum stetig erweitert und anschließend sich bis zum anderen Schlauchabschnitt (1c) stetig verengt.

4. Druckleitung nach Anspruch 1 bis 3, **dadurch gekennzeichnet,** daß an jedes freie Ende der Schlauchabschnitte (1c) gleichen Durchmessers eine Anschlußmuffe (4 bzw. 5) angespritzt ist.

5. Druckleitung nach Anspruch 1 bis 4, **gekennzeichnet durch die Merkmale:**
a) der Schlauchbildner besteht aus mindestens einem wendelgängig gewickelten Profilband (6);
b) eine Längsseite des Profilbandes (6) ist zu einem zum Schlauchinnern offenen U geformt, dessen Außenseite den schraubenförmig verlaufenden Wulst (1a) bildet;
c) die Innenseite des U-förmigen Profilbandrandes dient zur Aufnahme eines vom Schlauchinnern radial weggerichteten Steges (1d), der an der anderen Längsseite des Profilbandes (6) angeformt und fortlaufend mit mindestens einem Schenkel des U-förmigen Profilbandrandes verbunden ist.

## Claims

1. Pressure line with pressure chamber for connecting a tank with a pressure switch determining the level in the tank, characterised by the following features:
a) a smooth-bore flexible thermoplastic tube with at least one spiral rib (1a) on its outside extending at least to nearly the line ends is used as the pressure line (1);
b) the flexible tube diameter is increased over part of its length to form the pressure chamber (1b).

2. Pressure line according to Claim 1 characterised in that the pressure chamber (1b) is located between two flexible tube sections (1c) of equal internal diameter.

3. Pressure line according to Claims 1 and 2 characterised in that the diameter of the pressure chamber (1b) is continuously increased from one of the two tube sections (1c) of equal diameter to a maximum diameter and then continuously reduced to that of the other flexible tube section (1c).

4. Pressure line according to Claims 1 to 3 characterised in that a connecting sleeve (4 or 5) is moulded onto each of the two open ends of the flexible tube sections (1c) of equal diameter.

5. Pressure line according to Claims 1 to 4 characterised by the following features:
a) the flexible tube forming element consists of at least one helically wound profiled strip (6);
b) one of the longitudinal edges of the profiled strip (6) is shaped into a U which is open towards the inside of the flexible tube, whilst the outside of the U forms the spiral rib (1a);
c) the inside of the U-shaped profiled strip edge is designed to accommodate a web (1d) which is radially directed away from the inside of the flexible tube and moulded onto the other longitudinal edge of the profiled strip (6) and continuously bonded to at least one leg of the U-shaped profiled strip edge.

## Revendications

1. Conduite de pression avec chambre de pression destinée à relier un réservoir de liquide à un interrupteur à pression déterminant le niveau dans ce réservoir, caractérisée par les critères suivants:
a) un tuyau flexible thermoplastique à parois intérieures lisses est utilisé en tant que conduite de pression (1), ledit tuyau possédant un boudin hélicoïdal (1a) qui s'étend quasiment au moins jusqu'aux extrémités de la conduite;
b) le diamètre du tuyau s'élargit dans un segment partiel pour former la chambre de pression (1b).

2. Conduite de pression selon la revendication 1, caractérisée en ce que la chambre de pression (1b) est située entre deux segments de tuyau (1c) de même diamètre intérieur.

3. Conduite de pression selon les revendications 1 et 2, caractérisée en ce que le diamètre de la chambre de pression (1b) s'agrandit continuellement à partir de l'un des deux segments de tuyau (1c) de même diamètre jusqu'à atteindre le diamètre maximal et se réduit ensuite jusqu'à l'autre segment du tuyau (1c).

4. Conduite de pression selon les revendications 1 à 3, caractérisée en ce qu'un manchon de raccordement (4 ou 5) est moulé intégralement à chaque extrémité libre des segments de tuyau (1c) de même diamètre.

5. Conduite de pression selon les revendications 1 à 4, caractérisée par les critères suivants:
a) l'élément formant le tuyau flexible est constitué par au moins une bande profilée (6) enroulée helicoïdalement;
b) l'un des bords longitudinaux de la bande profilée (6) est formé en U qui est ouvert vers l'intérieur du tuyau et dont la face extérieure forme le boudin hélicoïdal (1a);
c) la face intérieure du bord de la bande profilée en U sert à recevoir une âme (1d) à orientation radiale par rapport à l'intérieur du tuyau, ladite âme étant moulée intégralement à l'autre bord longitudinal de la bande profilée (6) et reliée en continu à au moins l'un des côtés du bord en forme de U de la bande profilée.
